# EUROPÄISCHE PATENTSCHRIFT

(11) **EP 0 908 651 B1**
(45) Veröffentlichungstag und Bekanntmachung des Hinweises auf die Patenterteilung: **09.04.2003**
(21) Anmeldenummer: 98117761.1
(22) Anmeldetag: 18.09.1998
(51) Int. Cl.: F16K 15/14, B60S 1/52

(54) **Rückschlagventileinrichtung**
Check valve device
Dispositif de clapet de non-retour

(30) Priorität: 06.10.1997 DE 19744040
(43) Veröffentlichungstag der Anmeldung: 14.04.1999
(73) Patentinhaber: Siemens Aktiengesellschaft, 80333 München (DE)
(72) Erfinder: Martin, Uwe, 36179 Bebra (DE)

(56) Entgegenhaltungen:
- EP-A- 0 174 521
- EP-A- 0 738 636
- FR-A- 1 545 811
- FR-A- 2 673 154
- FR-A- 2 783 225
- US-A- 4 426 062
- US-A- 5 163 619

## Beschreibung

Die Erfindung bezieht sich auf eine Ventileinrichtung, insbesondere Scheibenreinigungseinrichtung in Kraftfahrzeugen, mit den Merkmalen des Oberbegriffs des Patentanspruchs 1, die aus der Praxis bekannt ist.

Die Einrichtung umfaßt im wesentlichen ein Düsengehäuse aus Kunststoff mit einem Kanal, zwei an dessen Ende eingesetzten Düsen sowie ein anderseitig in den Kanal eingestecktes und darin abgedichtet befestigtes Anschlußstück zum Zuführen einer Reinigungsflüssigkeit zu den Düsen. Das rohrförmige Anschlußstück ist an seinem den Düsen zugewandten Ende mit einem Rückschlagventil versehen. Dieses verhindert ein Zurücklaufen der Reinigungsflüssigkeit, wenn der Lieferdruck -z. B. durch Abschalten der zugehörigen Pumpe- abgebaut wird.

Im Detail ist das bekannte Rückschlagventil ähnlich wie die von älteren Fahrradschläuchen bekannten Schlauchventile aufgebaut. Das rohrförmige Anschlußstück ist auf seinem düsenseitigen Ende verschlossen, hat jedoch in seiner Mantelfläche wenigstens eine Bohrung. Diese ist von einem außen auf das Anschlußstück aufgezogenen dünnen und elastischen Schlauch abgedeckt. Steigt nun der Druck im Inneren des Anschlußstücks an, so wird der Schlauch durch die aus der Bohrung austretende Flüssigkeit geringfügig angehoben. Diese strömt dann zwischen der Außenmantelfläche des Anschlußstücks und der Schlauchinnenwand und tritt zu den Düsen hin aus.

Trotz des relativ einfachen äußeren Aufbaus hat diese Anordnung gewisse Nachteile im Hinblick auf die Durchströmung des Rückschlagventils. Der gewundene und beengte Überströmquerschnitt erhöht den Drosselwiderstand. Die Flüssigkeit wird beim Verlassen des Schlauchs quasi schlagartig entspannt und vernebelt, so daß eine unerwünschte Geräuschentwicklung zu besorgen ist. Außerdem wird zumindest zu Beginn eines jeden Sprühvorgangs, wenn der Bereich zwischen dem Rückschlagventil und den Düsen z. B. aufgrund Verdunstung noch leer oder nur teilweise gefüllt ist, den Düsen ein Luft-Wasser-Gemisch zugeführt, wodurch die gewünschte Reinigungswirkung zunächst durch mangelnden Sprühdruck vermindert wird.

Der Erfindung liegt die Aufgabe zugrunde, eine gattungsgemäße Ventileinrichtung vornehmlich in strömungstechnischer Hinsicht zu verbessern, jedoch die einfache Monterbarkeit und geringe Teilezahl beizubehalten.

Diese Aufgabe wird erfindungsgemäß mit den Merkmalen des Patentanspruchs 1 gelöst. Die Merkmale der Unteransprüche geben vorteilhafte Weiterbildungen dieses Gegenstands an.

Wenn im Gegensatz zum eingangs erörterten Stand der Technik das Anschlußstück an seinem zur Düse hin weisenden Ende offen ist und diese Öffnung von einer normalerweise geschlossenen Mündung eines elastischen Formteils abgedeckt ist, welche durch Fluiddruck geöffnet wird, so wird damit der Strömungswiderstand der Ventileinrichtung bei gleicher Wirkung deutlich vermindert.

Ein großer erfindungsgemäßer Vorteil ist es im Sinne der einfachen Montage und Minderung der Teilevielfalt, wenn das elastische Formteil den auf die Mündung folgenden Bereich des Kanals durch Ausfüllen eines zwischen dem Anschlußstück und dem Gehäuse gebildeten Ringspalts abdichtet.

Nach einer vorteilhaften Weiterbildung hat die Mündung einen flachdüsenartigen Querschnitt und ist zwischen dem offenen Ende des Anschlußstücks und der Düse in Achsrichtung des Kanals zu der Düse hin orientiert. Damit entfallen Umlenkungen der Strömung, so daß die Drosselverluste minimiert werden können.

Besonders vorteilhaft weist das Formteil einen auf das Anschlußstück mit Untermaß aufgezogenen rohrförmigen Abschnitt auf, von dem zwei drucklos aneinanderliegende, die Mündung bildende Lippen ausgehen. Diese Lippen lassen sich von dem Fluid leicht auseinanderdrücken und stören den durchtretenden Strahl nur wenig.

Wenn das elastische Formteil an seinem von der Düse abgewandten Ende eine ringförmig umlaufende, das Anschlußstück umgebende Verdickung hat, so kann diese als einstückige Ringdichtung zwischen dem Anschlußstück und dem Gehäuse die notwendige Abdichtung des Endabschnitts des Kanals vermitteln.

Vorzugsweise bildet der Kanal eine von der Düse abgewandte Ringschulter als Anschlag für das einzuschiebende Anschlußstück. Damit hat der Monteur eine fühlbare Rückmeldung, daß die Endstellung des Anschlußstücks im Gehäuse erreicht ist. Gleichzeitig kann diese Ringschulter in besonders funktioneller Weise als Anlagefläche für die Verdickung des elastischen Formteils dienen und bildet so einen Teil der Abdichtung des Kanals nach außen.

Ein wesentlicher Vorteil im Hinblick auf die Qualitätssicherung wird erreicht, wenn ein die Einstecktiefe des Anschlußstücks in den Kanal begrenzender Anschlag vorgesehen ist.

Dann läßt sich das Anschlußstück nur bis zu einer festen, von der kanalseitigen Ringschulter unabhängigen Tiefe in den Kanal einschieben. Ein versehentliches Verquetschen des elastischen Formteils wird so sicher verhindert. Natürlich könnte man einen solchen Anschlag kanalseitig vorsehen oder durch ein zusätzliches Bauelement realisieren. In besonders einfacher Weise wird dieser Anschlag jedoch durch einen an das Anschiußstück angeformten Ringbund gebildet, dessen Außendurchmesser größer als der einsteckseitige Durchmesser des Kanals ist

Gegen Beschädigung bei der Montage wird das Formteil ferner dadurch besonders zweckmäßig gesichert, daß sein Außendurchmesser im wesentlichen kleiner als der Außendurchmesser des Einsteckabschnitts des Anschlußstücks ist und daß letzteres an seinem endseitigen Außenrand eine Rille aufweist, auf welche das elastische Formteil aufziehbar ist. Nur die elastische Verdickung sollte den gleichen Außendurchmesser wie der Einsteckabschnitt haben oder auch geringfügig radial über diesen vorstehen.

Sie gelangt dann mit axialer Vorspannung gegen die erwähnte Ringschulter und wird so besonders zweckmäßig von der Druckeinwirkung entlastet. Infolge ihrer axialen Stauchung weitet sie sich radial auf, so daß sie ihre Dichtwirkung sowohl in axialer als auch in radialer Richtung nach außen wie nach innen entfaltet.

Für die Montage ist es schließlich von großem Vorteil, wenn das Anschlußstück gegenüber dem Gehäuse und/oder der Innenwand des Kanals formschlüssig durch Rastmittel in seiner Einbaulage fixiert ist, weil damit separate Handgriffe zum Festlegen des Anschlußstücks im Gehäuse entfallen und der ganze Vorgang ggf. auch mechanisiert werden kann.

Weitere Einzelheiten und Vorteile des Gegenstands der Erfindung gehen aus der Zeichnung eines Ausführungsbeispiels und deren sich im folgenden anschließender eingehender Beschreibung hervor.

Es zeigen in vereinfachter Darstellung
- Fig. 1: eine Schnittdarstellung durch die Ventileinrichtung in geschlossener Stellung des Rückschlagventils,
- Fig. 2: die Ventileinrichtung mit durch Fluiddruck geöffnetem Rückschlagventil.

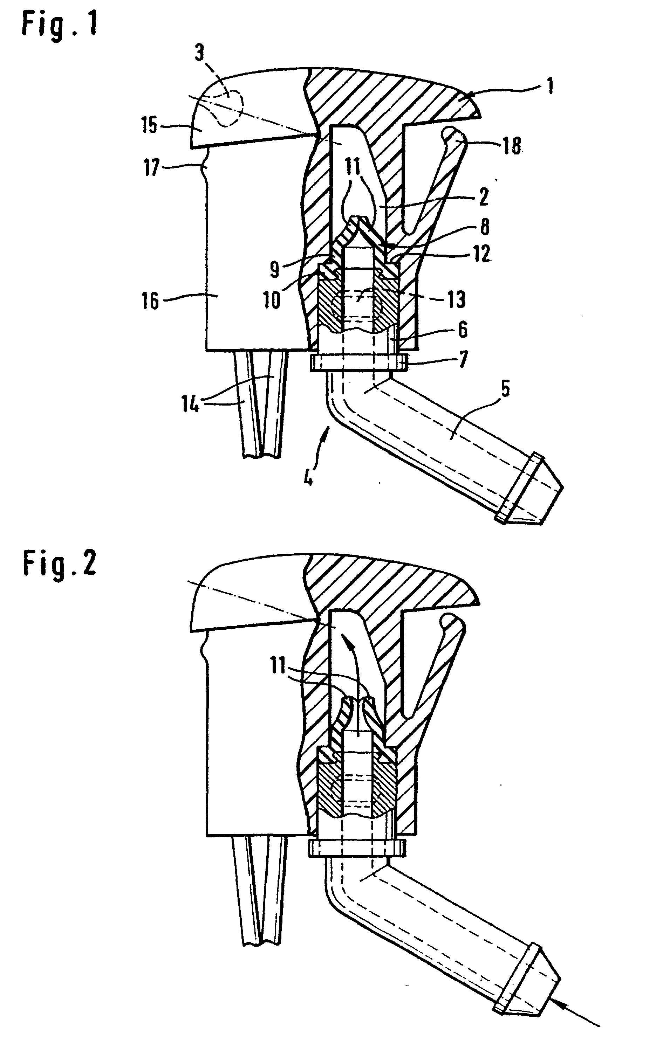

Gemäß **Fig. 1** ist in einem Gehäuse 1, das vorzugsweise aus spritzfähigem Kunststoff besteht, ein Kanal 2 ausgespart. Eine strichpunktierte, schräg nach links oben weisende Linie bezeichnet den weiteren Verlauf des Kanals zu einer nur angedeuteten Düse 3 In das von der Düse 3 abgewandte Ende des Kanals 2 ist ein rohrförmiges Anschlußstuck 4 eingesetzt.

Das Anschlußstück 4 umfaßt im wesentlichen einen aus dem Gehause 1 nach außen vorstehenden, hier winklig zum Kanal 2 verlaufenden Schlauchstutzen 5 mit einer endseitigen, ein Abziehen eines aufgezogenen -hier nicht gezeigten- Schlauchs erschwerenden Verdickung und einen in den Kanal 2 eingeführten, zylindrischen Einsteckabschnitt 6 mit einem zum Kanal 2 hin offenen Ende. Mit Abstand vom kanalseitigen Ende des Einsteckabschnitts steht ein Ringbund 7 über die Außenmantelfläche des Anschlußstücks vor, dessen Außendurchmesser größer ist als der Durchmesser des Kanalabschnitts, in den der Einsteckabschnitt 6 eingeschoben ist. Das offene Ende des Einsteckabschnitts 6 ist mittels eines elastischen, als Rückschlagventil dienenden Formteils 8 verschließbar.

Dieses ist mit einem rohrförmigen Abschnitt 9 außen auf den Endabschnitt 6 bzw. auf eine an dessen endseitige Außenkante ausgeformte Rille mit geringfügigem Untermaß aufgezogen bzw. aufgeknöpft. An seinem Außenrand hat es eine ringförmig umlaufende Verdickung 10. Deren Außendurchmesser entspricht wenigstens annähernd dem Außendurchmesser des Einsteckabschnitts 6. Anderseitig gehen zwei elastisch verformbare Dichtlippen 11 von dem rohrförmigen Abschnitt 9 aus, deren Enden mit geringer Vorspannung aneinanderliegen.

Die Innenwand des Kanals 2 bildet mit Abstand zu dessen Öffnung eine Ringschulter 12. Diese verringert den Innendurchmesser des Kanals 2 stufenartig von einem dem Außendurchmesser des Einsteckabschnitts 6 des Anschlußstücks 4 und der ringförmigen Verdickung 10 des Formteils 8 entsprechenden Maß etwa auf den Außendurchmesser des rohrförmigen Abschnitts 9 des Formteils 8. Die Ringschulter 12 bildet einen Montage-Endanschlag für die ringförmige Verdickung 10, wobei der Ringbund 7 des Anschlußstücks 4 ein versehentliches Verquetschen der elastisch verformbaren Verdickung 10 sicher verhindert, da er sich nur bis zur Außenkante des Gehäuses 1 an dieses annähern läßt.

Das Anschlußstück 4 bzw. sein Einsteckabschnitt 6 ist im Gehäuse 1 bzw. in der Innenwand des Kanals 2 mittels einer ebenfalls nur angedeuteten Rastverbindung 13 fixiert.

Diese schnappt elastisch ein, sobald die ringförmige Verdickung 10 geringfügig gestaucht mit axialer Vorspannung an der Ringschulter 12 des Kanals 2 anliegt. So wird mit einem Handgriff sowohl das Anschlußstück 4 im Kanal 2 fixiert als auch dessen düsenseitiger Endabschnitt bzw. Hohlraum nach außen hin durch die Verdickung 10 abgedichtet. Gleichzeitig wird sichergestellt, daß auch in der Fuge zwischen dem Anschlußstück und dem elastischen Formteil eine hinreichende Vorspannung entsteht, die ein Aussickern von Fluid verhindert.

Besonders günstig ist hierbei, daß die Dichtung sowohl in axialer als auch in radialer Richtung wirkt, denn durch die axiale Vorspannung bzw. Stauchung weitet sich die Verdickung radial auf.

Einmal in diesem Kanalabschnitt hinter dem Rückschlagventil befindliches Fluid kann nur noch durch die Düse 3 austreten.

**Fig. 2** verdeutlicht lediglich, daß sich die Dichtlippen des elastischen Formteils 8 bei Druckbeaufschlagung des Anschlußstücks 4 öffnen und einen Überströmquerschnitt freigeben, durch den ein durch Pfeile angedeuteter Fluidstrahl, insbesondere Reinigungsflüssigkeit für eine Fahrzeug-Fenster- oder Streuscheibe, zur Düse 3 hin austreten kann.

Die ganze Ventileinrichtung / Scheibenreinigungseinrichtung ist aus wenigen Einzelteilen mit wenigen Handgriffen sehr schnell und fehlersicher vormontierbar.

Links neben dem Kanal 2 ist in dem Gehäuse 1 vorzugsweise noch eine Heizeinrichtung untergebracht, die mit zwei nach unten austretenden Anschlußkabeln 14 elektrisch speisbar ist. Das Gehäuse 1 ist zum lösbaren Einrasten in eine Aussparung eines dünnen Karosserieteils, z. B. einer Fronthaube oder eines Pralldämpfers eines Kraftfahrzeugs, vorgesehen. Es hat zu diesem Zweck einen Kopf 15 und einen gegenüber dem Kopf zurückspringenden Schaft 16, an den einerseits eine Rastnase 17 und andererseits ein elastisch verformbarer Clipshaken 18 angeformt sind. Man führt die vormontierte Ventileinrichtung bei der Montage von der Außenseite her in die Aussparung des Blechs ein, bis die stufig gegenüber dem Schaft 16 vorspringende Unterkante des Kopfes 15 auf dem Rand der Aussparung aufliegt. Die Rastnase 17 und der Clipshaken 18 gelangen durch die Aussparung, kommen mit der Unterseite des Blechs in Kontakt und sichern so die Ventileinrichtung lösbar in der Aussparung.

Hiernach sind nur noch die elektrischen und fluidischen Anschlüsse herzustellen.

## Patentansprüche

1. Ventileinrichtung, insbesondere
Scheibenreinigungseinrichtung in Kraftfahrzeugen, umfassend ein Gehäuse (1) mit einem Kanal (2) und mindestens einer Düse (3) sowie ein rohrförmiges Anschlussstück (4) zum Zuführen eines unter Druck stehenden Fluids, insbesondere einer Reinigungsflüssigkeit, in den Kanal und zur Düse, welches Anschlussstück an seinem düsenseitigen Ende mit einem Rückschlagventil (8) versehen ist, welches gegen eine Rückströmung von der Düse (3) in das Anschlussstück (4) sperrt,
**dadurch gekennzeichnet, dass**
- das Anschlussstück (4) an seinem düsenseitigen Ende offen ist und
- das Rückschlagventil aus einem elastischen Formteil (8) mit einer normalerweise geschlossenen, durch den Druck der Reinigungsflüssigkeit zu öffnenden Mündung besteht und den auf die Mündung folgenden Bereich des Kanals (2) durch Ausfüllen eines zwischen dem Anschlussstück (4) und dem Gehäuse (1) gebildeten Ringspalts abdichtet.

2. Ventileinrichtung nach Anspruch 1, **dadurch gekennzeichnet, daß** die Mündung des Formteils (8) einen flachdüsenartigen Querschnitt hat und zwischen dem offenen Ende des Anschlußstücks (4) und der Düse (3) in Achsrichtung des Kanals (2) zu der Düse (3) hin orientiert ist.

3. Ventileinrichtung nach Anspruch 1 oder 2, **dadurch gekennzeichnet, daß** das Formteil (8) einen auf das Anschlußstück (4) mit Untermaß aufgezogenen rohrförmigen Abschnitt (9) aufweist, von dem zwei drucklos aneinanderliegende. die Mündung bildende Dichtlippen (11) ausgehen.

4. Ventileinrichtung nach einem der vorstehenden Ansprüche, **dadurch gekennzeichnet, daß** das elastische Formteil (8) an seinem von der Düse (3) abgewandten Ende eine ringförmig umlaufende, das Anschlußstück (4) umgebende Verdickung (10) hat.

5. Ventileinrichtung nach einem der vorstehenden Ansprüche, **dadurch gekennzeichnet, daß** der Kanal (2) eine von der Düse (3) abgewandte Ringschulter (12) als Anschlag für das einzuschiebende Anschlußstück (4) bildet.

6. Ventileinrichtung nach den Ansprüchen 4 und 5, **dadurch gekennzeichnet, daß** die Verdickung (10) des Formteils (8) in Einbaulage des Anschlußstücks (4) gegen die Ringschulter (12) mit Vorspannung in axialer Richtung des Kanals (2) anliegt.

7. Ventileinrichtung nach einem der vorstehenden Ansprüche, **dadurch gekennzeichnet, daß** ein die Einstecktiefe des Anschlußstücks (4) in den Kanal (2) begrenzender Anschlag (7) vorgesehen ist.

8. Ventileinrichtung nach Anspruch 7, **dadurch gekennzeichnet, daß** der Anschlag durch einen außen einstückig an das Anschlußstück (4) angeformten Ringbund (7) gebildet ist, dessen Außendurchmesser größer als der einsteckseitige Durchmesser des Kanals (2) ist.

9. Ventileinrichtung nach einem der vorstehenden Ansprüche, **dadurch gekennzeichnet, daß** der Außendurchmesser des elastischen Formteils (8) im wesentlichen kleiner als der Außendurchmesser eines in den Kanal (2) einzuführenden Einsteckabschnitts (6) des Anschlußstücks (4) ist und daß letzteres an seinem endseitigen Außenrand eine Rille aufweist, auf welche das elastische Formteil (8) aufziehbar ist.

10. Ventileinrichtung nach Anspruch 9, **dadurch gekennzeichnet, daß** der Außendurchmesser der elastischen Verdickung (10) gleich groß wie oder geringfügig größer als der des Einsteckabschnitts (6) ist.

11. Ventileinrichtung nach einem der vorstehenden Ansprüche, **dadurch gekennzeichnet, daß** das Anschlußstück (4) gegenüber dem Gehäuse (1) und/oder der Innenwand des Kanals (2) formschlüssig durch Rastmittel (13) in seiner Einbaulage fixiert ist.

## Claims

1. Valve device, in particular screen-cleaning device in motor vehicles, comprising a housing (1) with a duct (2) and with at least one nozzle (3), and also a tubular connection piece (4) for feeding a pressurized fluid, in particular a cleaning fluid, into the duct and to the nozzle, the said connection piece being provided at its nozzle-side end with a non-return valve (8) which blocks against a return flow from the nozzle (3) into the connection piece (4),
**characterized in that**
- the connection piece (4) is open at its nozzle-side end, and
- the non-return valve consists of an elastic moulding (8) with a normally closed mouth to be opened by the pressure of the cleaning fluid and seals off that region of the duct (2) which follows the mouth by filling an annular gap formed between the connection piece (4) and the housing (1).

2. Valve device according to Claim 1, **characterized in that** the mouth of the moulding (8) has a flat-nozzle-like cross section and between the open end of the connection piece (4) and the nozzle (3) is oriented towards the nozzle (3) in the axial direction of the duct (2).

3. Valve device according to Claim 1 or 2, **characterized in that** the moulding (8) has a tubular portion (9) which is drawn onto the connection piece (4) with undersize and from which emanate two sealing lips (11) bearing pressurelessly against one another and forming the mouth.

4. Valve device according to one of the preceding claims, **characterized in that** the elastic moulding (8) has, at its end facing away from the nozzle (3), an annularly peripheral thickening (10) surrounding the connection piece (4).

5. Valve device according to one of the preceding claims, **characterized in that** the duct (2) forms an annular shoulder (12) facing away from the nozzle (3), as a stop for the connection piece (4) to be pushed in.

6. Valve device according to Claims 4 and 5, **characterized in that**, in the installation position of the connection piece (4), the thickening (10) of the moulding (8) comes to bear against the annular shoulder (12) with prestress in the axial direction of the duct (2).

7. Valve device according to one of the preceding claims, **characterized in that** a stop (7) limiting the plug-in depth of the connection piece (4) into the duct (2) is provided.

8. Valve device according to Claim 7, **characterized in that** the stop is formed by an annular collar (7) which is integrally formed in one piece onto the connection piece (4) on the outside and the outside diameter of which is larger than the insertion-side diameter of the duct (2).

9. Valve device according to one of the preceding claims, **characterized in that** the outside diameter of the elastic moulding (8) is substantially smaller than the outside diameter of a plug-in portion (6), to be introduced into the duct (2), of the connection piece (4), and **in that** the latter has, at its end-face outer edge, a groove onto which the elastic moulding (8) can be drawn.

10. Valve device according to Claim 9, **characterized in that** the outside diameter of the elastic thickening (10) is equal to or slightly larger than that of the plug-in portion (6).

11. Valve device according to one of the preceding claims, **characterized in that** the connection piece (4) is fixed in its installation position in relation to the housing (1) and/or to the inner wall of the duct (2) in a form-locking manner by latching means (13).

## Revendications

1. Dispositif à valve, en particulier dispositif de lave-vitres dans les véhicules automobiles, comprenant un boîtier (1) contenant un canal (2) et au moins une buse (3), ainsi qu'une pièce de raccord (4) tubulaire destinée à amener un fluide sous pression, en particulier un liquide de nettoyage, dans le canal et vers la buse, ladite pièce de raccord étant munie sur son extrémité côté buse d'un clapet anti-retour (8), qui empêche un retour du liquide à partir de la buse (3) vers la pièce de raccord (4), **caractérisé en ce que** la pièce de raccord (4) est ouverte sur son extrémité côté buse et que le clapet anti-retour est formé par une pièce moulée élastique (8), qui comporte une embouchure normalement fermée, s'ouvrant sous l'effet de la pression du liquide de nettoyage et qui, en remplissant une fente annulaire formée entre la pièce de raccord (4) et le boîtier (1), assure l'étanchéité de la zone du canal consécutive à l'embouchure.

2. Dispositif à valve selon la revendication 1, **caractérisé en ce que** l'embouchure de la pièce moulée (8) a une section en forme de buse plate et, entre l'extrémité ouverte de la pièce de raccord (4) et la buse (3), est orientée vers la buse (3) dans le sens axial du canal (2).

3. Dispositif à valve selon la revendication 1 ou 2, **caractérisé en ce que** la pièce moulée (8) comporte une section tubulaire (9), qui est rapportée moyennant une dimension inférieure sur la pièce de raccord (4) et de laquelle partent deux lèvres d'étanchéité (11), formant l'embouchure et en contact sans pression l'une avec l'autre.

4. Dispositif à valve selon une des revendications précédentes, **caractérisé en ce que** la pièce moulée élastique (8) sur son extrémité opposée à la buse (3) comporte un renflement (10) périphérique annulaire entourant la pièce de raccord (4).

5. Dispositif à valve selon une des revendications précédentes, **caractérisé en ce que** le canal (2) forme un épaulement annulaire (12) opposé à la buse (3), constituant une butée pour la pièce de raccord (4) à insérer.

6. Dispositif à valve selon les revendications 4 et 5, **caractérisé en ce que**, dans la position de montage de la pièce de raccord (4), le renflement (10) de la pièce moulée (8) est en appui contre l'épaulement annulaire (12) avec une précontrainte dans le sens axial du canal (2).

7. Dispositif à valve selon une des revendications précédentes, **caractérisé en ce qu'**il est prévu une butée (7) limitant la profondeur d'introduction de la pièce de raccord (4) dans le canal (2).

8. Dispositif à valve selon la revendication 7, **caractérisé en ce que** la butée est formée par une collerette annulaire (7) formée à l'extérieur en une seule pièce avec la pièce de raccord (4).

9. Dispositif à valve selon une des revendications précédentes, **caractérisé en ce que** le diamètre extérieur de la pièce moulée élastique (8) est sensiblement inférieur au diamètre extérieur d'une section de raccordement (6) de la pièce de raccord (4) à insérer dans le canal (2).

10. Dispositif à valve selon la revendication 9, **caractérisé en ce que** le diamètre extérieur du renflement (10) élastique est égal ou légèrement supérieur à celui de la pièce d'introduction (6).

11. Dispositif à valve selon une des revendications précédentes, **caractérisé en ce que** la pièce de raccord (4) est bloquée dans sa position de montage par rapport au boîtier (1) et/ou la paroi intérieure du canal (2) par conjugaison de forme par l'intermédiaire de moyens de blocage à cran d'arrêt (13).
